# EUROPEAN PATENT APPLICATION

(11) **EP 4 249 101 A1**
(43) Date of publication of application: **27.09.2023**
(21) Application number: 21893846.2
(22) Date of filing: 15.11.2021
(51) Int. Cl.: B01D 45/14

(54) **ADAPTIVE MULTI-PHASE INTEGRATED SEPARATION DEVICE, AND METHOD**

(30) Priority: 17.11.2020 CN 202011283927
(71) Applicant: East China University Of Science And Technology, Shanghai 200237 (CN)
(72) Inventor: YANG, Qiang, Shanghai 200237 (CN); LIU, Yiqian, Shanghai 200237 (CN); QIAN, Yundong, Shanghai 200237 (CN); DAI, Pinyi, Shanghai 200237 (CN); LI, Yudong, Shanghai 200237 (CN); LU, Hao, Shanghai 200237 (CN)
(74) Representative: Plasseraud IP
(86) International application number: PCT/CN2021/130520
(87) International publication number: WO 2022/105699

(57) **Abstract**

The invention provides an adaptive and integrated multi-phase integrated separation device and a method. The device comprises at least one integrated separation core tube, which comprises a main separation pipe, auxiliary separation pipes and connecting pipes between them. The bottom inlet of the main separation pipe is provided with a swirl generator. The auxiliary separation pipe is provided with tangential swirl generation openings of the auxiliary separation pipe along the axial direction. A heavy phase separation cone in the shape of a cone or a protruding platform is provided at the bottom portion of the auxiliary separation pipe. The invention realizes the collaborative separation of oil, gas and turbidity through the coupling structure of main and auxiliary separation pipe, and has high adaptability to fluctuations in the content of oil, gas, and turbidity in the material. It breaks through the limitations of traditional methods, with extremely high operational flexibility in processing capacity, and is suitable for compact treatment of high oil and high turbidity wastewater. The separation efficiency is high, and it can achieve compact and fast separation under short process, effectively reducing the area of relevant separation systems.

## Description

### TECHNICAL FIELD

The invention relates to the field of petrochemical industry and environmental protection, in particular, to an adaptive and integrated multi-phase separation device and a method thereof.

### BACKGROUND

A large number of oily wastewater is generated in petrochemical industry, coal chemical industry, metallurgy, machinery manufacturing, textile printing and dyeing, pharmaceutical, food processing, catering and other industries. Oily wastewater not only comes from a wide range of sources but also has a complex composition. In the world, 50 million to 100 million tons of oil substances enter water every year, causing great harm to the Marine and river water environment, as well as the soil environment. The current treatment technology of oily wastewater is usually only focused on the oil content. However, the actual oily wastewater, especially in the oil and gas exploitation and petrochemical industry, usually contains a large number of dissolved and insoluble gases and suspended solid particles. The collaborative separation of oily wastewater is an important direction of the current technology development. In the current degassing and deoiling equipment, such as hydrocyclones, pipe separators and other technical equipment using swirling flow field for separation have been widely used because of their compact structure and non-moving parts, but a major factor limiting its development is its narrow range of optimal operating flow rate, which requires relatively strict control of the processing capacity of the equipment.

CN201720744919.0 discloses a degassing and deoiling hydraulic coalescing device, and its main purpose is to provide a new separation device for separation of gas-liquid-liquid three-phase. The turbidity removal performance is not further mentioned in the invention, and there is still the limitation of the small processing capacity of the current hydrocyclone equipment. CN201611062892.3 discloses a method for dust removal and oil removal of coal chemical wastewater based on filtration and interception. The invention takes into account the removal of solid particulate matter, but the equipment with the filtration and interception as the basic principle, is bound to face the problems such as large floor area, backwashing and replacement of filter material or filter media.

Therefore, an adaptive separation method and related device are needed urgently which can realize collaborative removal and separation of oil, gas and turbidity.

### SUMMARY

Aiming at the deficiency of the prior art, the invention provides an adaptive and integrated multi-phase separation device and a method to solve a series of problems such as gas phase impact and narrow operating elastic range faced by the existing technical equipment using swirl flow field for separation.

To solve the above technical problems, the first technical solution provided by the invention is as follows:
An adaptive and integrated multi-phase separation device, comprising more than one integrated separation core tube, wherein the integrated separation core tube comprises a main separation pipe, auxiliary separation pipes and connecting pipes between main and auxiliary pipes connecting the main separation pipe and the auxiliary separation pipes. More than two auxiliary separation pipes are arranged around the main separation pipe. The bottom inlet of the main separation pipe is provided with a swirl generator. The swirling flow field generated by the swirl generator makes the liquid flowing through the main separation pipe transform from axial motion to rotary motion. The auxiliary separation pipe is provided with tangential swirl generation openings of the auxiliary separation pipe along the axial direction. The tangential swirl generation opening of the auxiliary separation pipe makes the liquid enter the auxiliary separation pipe tangentially for rotating motion. A heavy phase separation cone in the shape of a cone or a protruding platform is provided at the bottom portion of the auxiliary separation pipe.

The invention is further set as, the number of the auxiliary separation pipe is 1 to 6, and the rotation direction of the flow field of the auxiliary separation pipe is clockwise or counterclockwise, which is the same or opposite to the flow field rotation direction of the main separation pipe.

The invention is further set as, the main separation pipe contains main separation cavity, and the auxiliary separation pipe contains auxiliary separation cavity. The upper part of the main separation pipe is provided with a light phase drainage cone of the main separation cavity, and the upper part of the auxiliary separation pipe is provided with a light phase drainage cone of the auxiliary separation cavity.

The invention is further set as, the incline angle of the light phase drainage cone of the main separation cavity is 10° to 75°, and the middle of the light phase drainage cone of the main separation cavity is provided with a main drainage hole with an angle of 0° to 10°. The diameter of the main drainage hole is 0.1 to 0.8 times of the diameter of the main separation cavity. The incline angle of the light phase drainage cone of the auxiliary separation cavity is 10° to 75°, and the middle of the light phase drainage cone of the auxiliary separation cavity is provided with an auxiliary drainage hole with an angle of 0° to 10°. The diameter of the auxiliary drainage hole is 0.1 to 0.8 times of the diameter of the auxiliary separation cavity.

The invention is further set as, the top of the main separation pipe is provided with an anti-impact cap of the main separation cavity, and the top of the auxiliary separation pipe is provided with an anti-impact cap of the auxiliary separation cavity.

The invention is further set as, the swirl generator is guide blade, and the helical inclination of the guide blade is 10° to 75°. Perhaps the swirl generator is tangential inlet, and the number of tangential inlet is 1 to 6.

The invention is further set as, the length of the main separation pipe is 1 to 20 times of the inner diameter of the main separation pipe, and the length of the auxiliary separation pipe is 1 to 20 times of the inner diameter of the auxiliary separation pipe.

The invention is further set as, the incline angle of the heavy phase separation cone is 10° to 75° and the diameter of the heavy phase separation cone is 0.2 to 0.8 times of the inner diameter of the auxiliary separation pipe.

The invention is further set as, the bottom of each main separation pipe is connected with a distribution pipe. The side of the distribution pipe is jointly connected with connecting pipe. The bottom of the distribution pipe is jointly connected with connecting distribution pipe. The end of the connecting distribution pipe is jointly connected with a distribution tank. The bottom of the distribution tank is connected with an import pipe.

The invention is further set as, the connecting distribution pipes are evenly distributed radially along the radial direction with the center of the distribution tank, and the number is 2 to 6.

The invention is further set as, the cross section of the connecting pipe between main and auxiliary pipes is rectangular or circular, and the connecting pipes between main and auxiliary pipes are longitudinally distributed with a number of 2 to 8. The length of the connecting pipe between main and auxiliary pipes b=(D+d)/2+(10 to 200) mm; wherein D is the inner diameter of the main separation pipe, and d is the inner diameter of the auxiliary separation pipe.

The invention is further set as, if there are more than one integrated separation core tubes, the distribution mode is triangle arrangement, radial arrangement or triangle combined radial arrangement with the distribution tank as the center evenly, and the number of distribution turns is 1 to 6.

The second technical solution provided by the invention is as follows: an adaptive and integrated multi-phase separation method which comprises the following steps.
(1) Materials to be processed enter the main separation pipe.
(2) Large bubbles, large particle size oil droplets and suspended solids adhering to the large bubbles and large particle size oil droplets are removed from the top of the main separation pipe through the action of swirling flow field in the main separation pipe.
(3) The remaining liquid phase after separation enters the auxiliary separation pipes through the connecting pipes between main and auxiliary pipes. Through the tangential swirl generation opening of the auxiliary separation pipe, the liquid phase does rotational flow in the auxiliary separation pipe to further remove small bubbles, small particle size oil droplets and remaining suspended solids adhering to the small bubbles and small particle size oil droplets.
(4) The heavy liquid phase obtained after separation is discharged from the periphery of the heavy phase separation cone.

The invention is further set as, the size of the large bubble is greater than 10µm, the size of the large particle size oil droplet is greater than 20µm, the size of the small bubble is 5 to 10µm, and the size of the small particle size oil droplet is 10 to 20µm.

The invention further set as, the acceleration of the main phase processed in the main separation pipe is 5 to 5000 times of the gravitational acceleration, and the acceleration of the main phase processed in the auxiliary separation pipe is 10 to 10000 times of the gravitational acceleration.

The third technical solution provided by the invention is as follows: an adaptive and integrated multi-phase separation method which comprises the following steps.
(1) Materials to be treated enter the distribution tank through the import pipe. After being buffered by the distribution tank, materials to be treated enter the connecting distribution pipe, and materials reach the distribution pipe through the connecting distribution pipe. The distribution pipes are connected to ensure uniform distribution of materials. Materials enter the integrated separation core tube through the distribution pipe.
(2) Materials to be treated first enter the main separation pipe of the integrated separation core tube, and large bubbles, large particle size oil droplets and suspended solids adhering to the large bubbles and large particle size oil droplets are removed through the action of swirling flow field in the main separation pipe.
(3) The remaining liquid phase after separation enters the auxiliary separation pipes through the connecting pipes between main and auxiliary pipes. Through the tangential swirl generation opening of the auxiliary separation pipe, the liquid phase does rotational flow in the auxiliary separation pipe to further remove small bubbles, small particle size oil droplets and remaining suspended solids adhering to the small bubbles and small particle size oil droplets.
(4) The heavy liquid phase obtained after separation is discharged from the periphery of the heavy phase separation cone.

The invention is further set as, the integrated separation core tube is single or multiple, and the pressure drop of the integrated separation core tube is less than 0.3MPa.

In summary, the invention has the following beneficial effects.
(1) The invention realizes the collaborative separation of oil, gas and turbidity through the coupling structure of the main separation pipe and the auxiliary separation pipe.
(2) The oil phase removal rate and gas phase removal rate of the invention are both greater than 90%, and the treatment capacity has a very high operational flexibility. Compared with traditional swirling flow field separation method, the treatment capacity has a very high operational flexibility of 50% to 150%, which is suitable for compact treatment of high oil and high turbidity waste water, with high separation efficiency. The purpose of compact and fast separation has been achieved in a short process, which can effectively reduce the area of related separation system and make up for the deficiency of the prior art.
(3) Within the elastic range of flow operation designed by the invention, the pressure drop of the integrated separation core tube is less than 0.3Mpa.

### BRIEF DESCRIPTION OF THE DRAWINGS

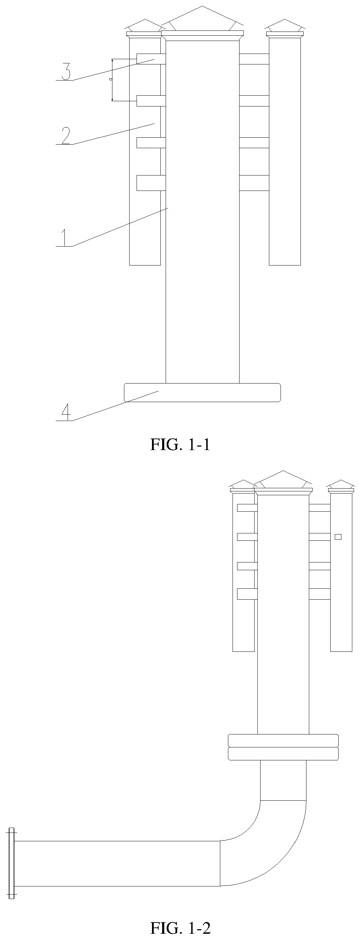

FIG. 1-1 is a schematic diagram of an adaptive and integrated multi-phase separation device;
FIG. 1-2 is another schematic diagram of the adaptive and integrated multi-phase separation device;
FIG.2 is a structure diagram of a main separation pipe;
FIG.3 is a structure diagram of an auxiliary separation pipe;
FIG.4-1 to FIG.4-4 are the top view of the structure of the auxiliary separation pipes with number of 2(the same spin direction with the main separation pipe), 2(the opposite spin direction with the main separation pipe), 3(the same spin direction with the main separation pipe), 3(the opposite spin direction with the main separation pipe) respectively;
FIG.5-1 is a structure diagram of guide blade;
FIG.5-2 is another structure diagram of the guide blade;
FIG.6-1 is the top view of the structure of a tangential inlet;
FIG.6-2 is the top view of the structure of three tangential inlets;
FIG.7-1 is an assembly diagram of multiple integrated separation core tubes (with multiple distributed pipes, only one integrated separation core tube is drawn);
FIG.7-2 is the top view of partial structure in FIG.7-1;
FIG.8-1 is an assembly diagram of multiple integrated separation core tubes (with multiple distributed pipes, only one integrated separation core tube is drawn);
FIG.8-2 is the top view of partial structure in FIG.8-1;
FIG.9-1 to FIG.9-3 shows the distribution form of integrated separation core tubes (triangle arrangement, radial arrangement and triangle combined radial arrangement respectively).
FIG.10 is a schematic diagram of the installation structure in a vertical device of the invention.
FIG. 11 is a schematic diagram of the installation structure in a horizontal device of the invention.

In these figures, 1: a main separation pipe; 2: an auxiliary separation pipe; 3: a connecting pipe between main and auxiliary pipes; 4: a connecting piece;
1-1: a swirl generator; 1-2: a main separation cavity; 1-3: a light phase drainage cone of the main separation cavity; 1-4: an anti-impact cap of the main separation cavity; 1-5: guide blade; 1-6: a tangential inlet; 1-7: a main drainage hole;
2-1: a tangential swirl generation opening of the auxiliary separation pipe; 2-2: a heavy phase separation cone; 2-3: an auxiliary separation cavity; 2-4: a light phase drainage cone of the auxiliary separation cavity; 2-5: an anti-impact cap of the auxiliary separation cavity; 2-6: an auxiliary drainage hole;
0-1: an integrated separation core tube; 0-2: a distribution pipe; 0-3: a connecting distribution pipe; 0-4: an import pipe; 0-5: a connecting pipe; 0-6: a distribution tank.

### DETAILED DESCRIPTION

The following is a clear and complete description of the technical scheme in the embodiments of the invention in combination with the drawings attached to the embodiments of the invention. Obviously, the described embodiments are only a part of the embodiments of the invention, but not the whole embodiments. Based on the embodiments of the invention, all other embodiments obtained by ordinary technical personnel in the field without creative labor are within the scope of protection of the invention.

### Embodiment 1

Referring to FIG. 1, the invention relates to an adaptive and integrated multi-phase separation device. The separation device comprises more than one integrated separation core tube 0-1, and the integrated separation core tube 0-1 comprises a main separation pipe 1, auxiliary separation pipes 2 and connecting pipes between main and auxiliary pipes 3 connecting the main separation pipe 1 and the auxiliary separation pipes 2. More than two auxiliary separation pipes 2 are arranged around the main separation pipe 1. The bottom inlet of the main separation pipe 1 is provided with a swirl generator 1-1, and the swirling flow field generated by the swirl generator 1-1 makes the liquid flowing through the main separation pipe 1 transform from axial motion to rotational motion. The auxiliary separation pipes 2 along the axial direction are provided with tangential swirl generation openings of the auxiliary separation pipe 2-1, and the tangential swirl generation opening of the auxiliary separation pipe 2-1 makes the liquid flowing enter the auxiliary separation pipe 2 through the tangential direction for rotational motion. The bottom of the auxiliary separation pipe 2 is provided with a conical or convex shaped heavy phase separation cone 2-2.

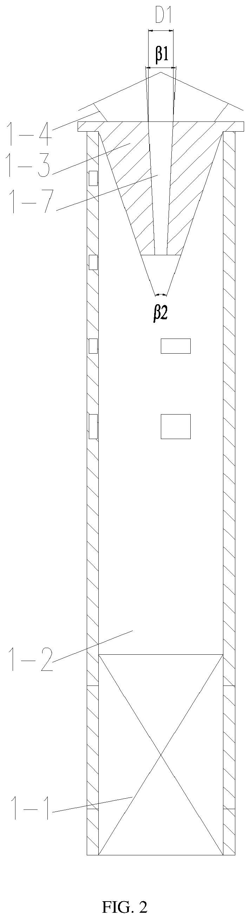

Further, a connecting piece 4 may be connected with the bottom of the main separation pipe 1 for connection to other equipment or pipe. Referring to FIG. 2, another adaptive and integrated multi-phase separation device structure can be connected to other pipes through the connecting piece 4.

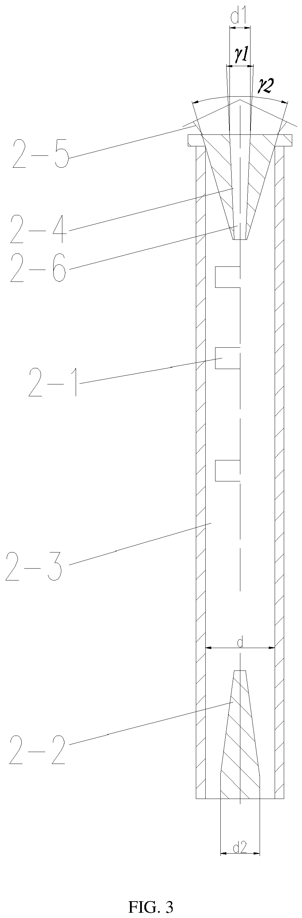

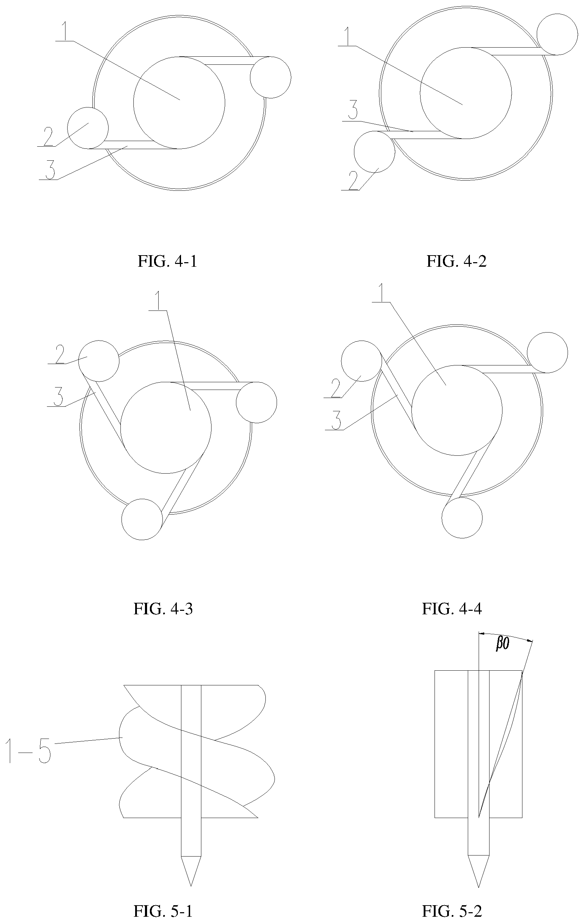

Referring to FIG. 2 and FIG. 3, the main separation pipe 1 contains main separation cavity 1-2, and the auxiliary separation pipe 2 contains auxiliary separation cavity 2-3. The upper part of the main separation pipe 1 is provided with a light phase drainage cone of the main separation cavity 1-3, and the upper part of the auxiliary separation pipe 2 is provided with a light phase drainage cone of the auxiliary separation cavity 2-4. The number of the auxiliary separation pipes 2 is 1 to 6, and the rotation direction of the flow field of the auxiliary separation pipes 2 is clockwise or counterclockwise, which is the same or opposite to that of main separation pipe 1. Among them, the structure of the auxiliary separation pipes 2 with number of 2 or 3 can be seen in FIG. 4-1 to FIG. 4-4. The incline angle of the light phase drainage cone of the main separation cavity 1-3 is 10° to 75°. The light phase drainage cone of the main separation cavity 1-3 is provided with a main drainage hole 1-7 with an angle of 0° to 10°. The diameter of the main drainage hole 1-7 is 0.1 to 0.8 times of the diameter of the main separation cavity 1-2. The incline angle of the light phase drainage cone of the auxiliary separation cavity 2-4 is 10° to 75°. The light phase drainage cone of the auxiliary separation cavity 2-4 is provided with an auxiliary drainage hole 2-6 with an angle of 0° to 10°. The diameter of the auxiliary drainage hole 2-6 is 0.1 to 0.8 times of the diameter of the auxiliary separation cavity 2-3.

The top of the main separation pipe 1 is provided with an anti-impact cap of the main separation cavity 1-4 for anti impact, and the top of the auxiliary separation pipe 2 is provided with an anti-impact cap of the auxiliary separation cavity 2-5.

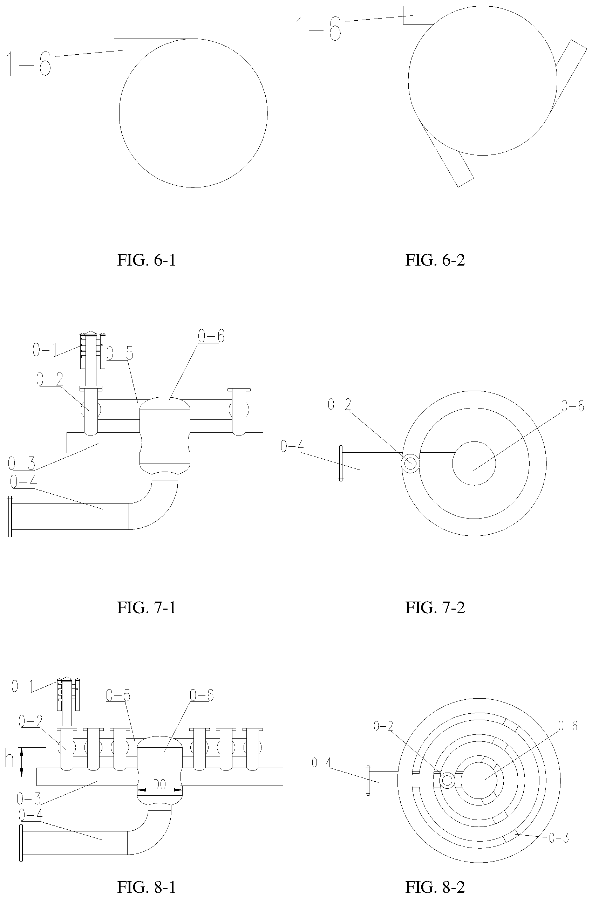

Referring to FIG. 5-1 and FIG. 5-2, the swirl generator 1-1 is guide blade 1-5, and the helical inclination of the guide blade 1-5 is 10° to 75°. Alternatively, referring to FIG. 6-1 and FIG. 6-2, the swirl generator 1-1 is tangential inlet 1-6, and the number of the tangential inlet 1-6 is 1 to 6.

The length of the main separation pipe 1 is 1 to 20 times of the inner diameter of the main separation pipe 1, and the length of the auxiliary separation pipe 2 is 1 to 20 times of the inner diameter of the auxiliary separation pipe 2.

The incline angle of the heavy phase separation cone 2-2 is 10° to 75° and its diameter is 0.2 to 0.8 times of the inner diameter of the auxiliary separation pipe 2.

The material separation process in this embodiment is as follows: the material to be treated enters the adaptive degassing, oil and turbidity-removing integrated separation core tube 0-1 of main and auxiliary cavity combination to realize the collaborative and integrated separation of oil, gas and turbidity. After the material separation is completed, it is buffered in a vertical container, and the gas phase, turbidity-containing oil phase, and treated water are discharged through corresponding interfaces.

### Embodiment 2

Referring to FIG. 7-1, FIG. 7-2, FIG. 8-1 and FIG. 8-2, the bottom of each main separation pipe 1 is connected with a distribution pipe 0-2. The side of each distribution pipe 0-2 is jointly connected with connecting pipe 0-5. The bottom of each distribution pipe 0-2 is jointly connected with connecting distribution pipe 0-3, and the end of each connecting distribution pipe 0-3 is jointly connected with a distribution tank 0-6, which is a horizontal or vertical container. The bottom of the distribution tank 0-6 is connected with an import pipe 0-4.

The connecting distribution pipes 0-3 are radially distributed evenly around the center of the distribution tank 0-6, with a number of 2 to 6.

The cross section of the connecting pipe between main and auxiliary pipes 3 is rectangular or circular, which is longitudinally distributed with a number of 2 to 8. The length of the connecting pipe between main and auxiliary pipes 3 b=(D+d)/2+(10 to 200) mm, wherein D is the inner diameter of the main separation pipe 1, and d is the inner diameter of the auxiliary separation pipe 2.

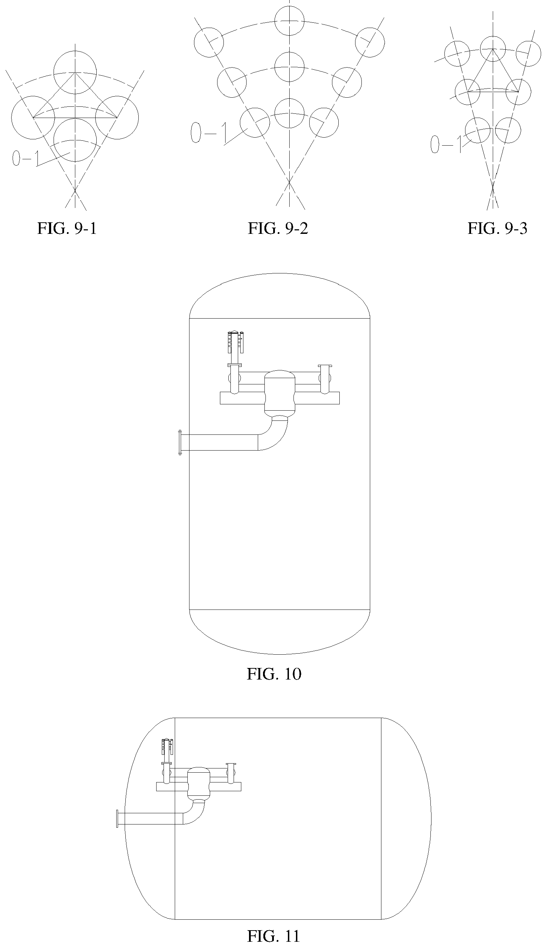

According to the different processing capacity of the equipment design, the integrated separation core tube 0-1 is set as single or multiple roots. If the equipment size is large enough, multiple roots can be arranged. If there are more than one integrated separation core tubes 0-1, the distribution mode is to form a triangle, radial shape, or a combination of the two shapes evenly with the distribution tank 0-6 as the center, and the number of distribution turns is 1 to 6, referring to FIG. 9-1 to FIG. 9-3.

Referring to FIG. 10 and FIG. 11, the separation device of the invention can be installed in a vertical device or a horizontal device.

The material separation process in this embodiment is as follows: the material to be treated enters the distribution tank 0-6 through the import pipe 0-4. After being buffered by the distribution tank 0-6, the material to be treated enters the connecting distribution pipes 0-3 with circumferential and uniform distribution. The material reaches the distribution pipes 0-2 through the connecting distribution pipes 0-3, and the distribution pipes 0-2 are connected through the connecting pipe 0-5 to ensure uniform distribution of the material. The material enters the adaptive degassing, oil and turbidity-removing integrated separation core tube 0-1 of main and auxiliary cavity combination through the distribution pipe 0-2, realizing the collaborative and integrated separation of oil, gas and turbidity. After the material separation is completed, it is buffered in a vertical container, and the gas phase, turbidity-containing oil phase, and treated water are discharged through corresponding interfaces.

### Embodiment 3

This embodiment provides a more specific structure of the adaptive and integrated multi-phase separation device. A vertical tank body is equipped with multiple and parallel separators with combination of main and auxiliary cavities to realize efficient and rapid separation. The distribution tank 0-6 is a cylindrical container with oval head. Running at the maximum capacity of operation for 0.3s, the material can fill the entire distribution tank 0-6. Three connecting distribution pipes 0-3 are radially distributed evenly around the center of the distribution tank 0-6, with an angle of 120° between each adjacent connecting distribution pipe 0-3. The inner diameter of the connecting pipe 0-5 is 0.8 times of the inner diameter of the import pipe 0-4. The inner diameter of the distribution pipe 0-2 and the inner diameter of the main separation pipe 1 remain consistent. A total of 40 integrated separation core tubes 0-1 are installed, arranged in a triangular combined radial distribution, and the number of the distribution turns is selected as 3. The liquid phase flow rate in the import pipe 0-4 is 1.5m/s.

The connecting piece 4 is connected by flange connection in an integrated separation core tube 0-1. The rotation direction of flow field in the main separation cavity 1-2 is clockwise. The connecting pipe between main and auxiliary pipes 3 are tangentially connected to the main separation cavity 1-2 and the auxiliary separation cavity 2-3 with a rectangular cross-section. The cross-sectional area of the connecting pipe between main and auxiliary pipes 3 is 0.5 times of the cross-sectional area of the auxiliary separation cavity 2-3. The connecting pipes between main and auxiliary pipes 3 are longitudinally and uniformly distributed with a number of 5, and the length of the connecting pipe between main and auxiliary pipes 3 is 150mm. The rotation direction of flow field in four auxiliary separation cavity 2-3 is clockwise.

The swirl generator 1-1 of the main separation pipe 1 is clockwise guide blade 1-5, and the helical inclination angle of the guide blade β0 is 45°. The inner diameter of the main separation pipe 1 is 150mm, and the length of the main separation pipe 1 is 450mm. The incline angle β2 of the light phase drainage cone of the main separation cavity 1-3 is 30°, and the angle β1 of the main drainage hole 1-7 is 3°. The diameter of the main drainage hole 1-7 D1=25mm. The anti-impact cap of the main separation cavity 1-4 is installed above the light phase drainage cone of the main separation cavity 1-3. The heavy phase separation cone 2-2 is arranged at the bottom of the auxiliary separation cavity 2-3 with shape of convex, diameter d2 of 40mm, and incline angle of 30°. The incline angle γ2 of light phase drainage cone of the auxiliary separation cavity 2-4 is 20°. The inner diameter of the auxiliary separation pipe 2 is 50mm and the length is 300mm. The angle γ1 of the auxiliary drainage hole 2-6 is 3°, and the diameter of the auxiliary drainage hole 2-6 d1=25mm. The anti-impact cap of the auxiliary separation cavity 2-5 is installed above the light phase drainage cone of the auxiliary separation cavity 2-4.

In a narrow and long space, four vertical tanks with a diameter of 1800mm are connected in parallel to realize the expansion of the platform's production water treatment capacity of 24000m³/d. The average content of oil in the imported production water of the equipment is 2000mg/L, and the maximum content of oil can be 3000mg/L. The dissolved gas in the imported material of the equipment is in a saturated state. In addition, there is also a gas phase with a volume ratio of about 10%, and the turbidity-containing concentration is about 1000mg/L. After separation by the equipment, the average content of oil at the outlet of the water is less than 150mg/L, with a minimum of 90 mg/L. The removal rate of gas phase is > 95%, and the overall pressure drop of the equipment is < 0.2MPa.

The above are only preferred embodiments of the invention and are not intended to limit the invention. Any modifications, equivalent substitutions, improvements, etc. made within the spirit and principles of the invention shall be covered by the protection of the invention.

## Claims

1. An adaptive and integrated multi-phase separation device, comprising more than one integrated separation core tube, wherein the integrated separation core tube comprises
a main separation pipe,
auxiliary separation pipes, and
connecting pipes between main and auxiliary pipes connecting the main separation pipe and the auxiliary separation pipes;
and wherein more than two auxiliary separation pipes are arranged around the main separation pipe;
and wherein the bottom inlet of the main separation pipe is provided with a swirl generator, generating swirling flow field to make the liquid flowing through the main separation pipe transform from the axial motion to rotary motion; and
the auxiliary separation pipe is provided with tangential swirl generation openings of the auxiliary separation pipe along the axial direction, making the liquid enter the auxiliary separation pipe tangentially for rotating motion;
and wherein a heavy phase separation cone in the shape of a cone or a protruding platform is provided at the bottom portion of the auxiliary separation pipe.

2. The adaptive and integrated multi-phase separation device in Claim 1, wherein the main separation pipe contains main separation cavity, which is provided with a light phase drainage cone of the main separation cavity at its upper part, and
the auxiliary separation pipe contains auxiliary separation cavity, which is provided with a light phase drainage cone of the auxiliary separation cavity at its upper part.

3. The adaptive and integrated multi-phase separation device in Claim 2, wherein the light phase drainage cone of the main separation cavity with an incline angle of 10° to 75°, which is provided with a main drainage hole with an angle of 0° to 10°, and a diameter of 0.1 to 0.8 times of the diameter of the main separation cavity; and
the light phase drainage cone of the auxiliary separation cavity with an incline angle of 10° to 75°, which is provided with an auxiliary drainage hole with an angle of 0° to 10°, and a diameter of 0.1 to 0.8 times of the diameter of the auxiliary separation cavity.

4. The adaptive and integrated multi-phase separation device in Claim 2, wherein the top of the main separation pipe is provided with an anti-impact cap of the main separation cavity, and
the top of the auxiliary separation pipe is provided with an anti-impact cap of the auxiliary separation cavity.

5. The adaptive and integrated multi-phase separation device in Claim 1, wherein the swirl generator is guide blade, and the helical inclination of the guide blade is 10° to 75°; or
the swirl generator is tangential inlet, and the number of tangential inlet is 1 to 6.

6. The adaptive and integrated multi-phase separation device in Claim 1, wherein the length of the main separation pipe is 1 to 20 times of its inner diameter and the length of the auxiliary separation pipe is 1 to 20 times of its inner diameter.

7. The adaptive and integrated multi-phase separation device in Claim 1, wherein the incline angle of the heavy phase separation cone is 10° to 75°, and
the diameter of the heavy phase separation cone is 0.2 to 0.8 times of the inner diameter of the auxiliary separation pipe.

8. The adaptive and integrated multi-phase separation device in Claim 1, wherein
the bottom of each main separation pipe is connected with a distribution pipe,
the side of the distribution pipe is jointly connected with connecting pipe,
the bottom of the distribution pipe is jointly connected with connecting distribution pipe,
the end of the connecting distribution pipe is jointly connected with a distribution tank, and
the bottom of the distribution tank is connected with an import pipe.

9. The adaptive and integrated multi-phase separation device in Claim 8, wherein the connecting distribution pipes are evenly distributed radially along the radial direction with the center of the distribution tank, and the number is 2 to 6.

10. The adaptive and integrated multi-phase separation device in Claim 1, wherein the cross section of the connecting pipe between main and auxiliary pipes is rectangular or circular, and
the connecting pipe between main and auxiliary pipes are longitudinally distributed with a number of 2 to 8, and
the length of the connecting pipe between main and auxiliary pipes b=(D+d)/2+(10 to 200) mm, wherein D is the inner diameter of the main separation pipe, and d is the inner diameter of the auxiliary separation pipe.

11. The adaptive and integrated multi-phase separation device in Claim 8, wherein if there are more than one integrated separation core tubes, the distribution mode is to form a triangle, a radial or a combination of the two shapes evenly with the distribution tank as the center, and the number of distribution turns is 1 to 6.

12. A separation method using the adaptive and integrated multi-phase separation device in any of Claim 1 to 7, wherein the separation method includes the steps of:
(1) materials to be processed entering the main separation pipe;
(2) large bubbles, large particle size oil droplets and suspended solids adhering to the large bubbles and large particle size oil droplets being removed from the top of the main separation pipe through the action of swirling flow field in the main separation pipe;
(3) the remaining liquid phase after separation entering the auxiliary separation pipes through the connecting pipes between main and auxiliary pipes, through the tangential swirl generation opening of the auxiliary separation pipe, the liquid phase doing rotational flow in the auxiliary separation pipe to further remove small bubbles, small particle size oil droplets and remaining suspended solids adhering to the small bubbles and small particle size oil droplets; and
(4) the heavy liquid phase obtained after separation being discharged from the periphery of the heavy phase separation cone.

13. The separation method in Claim 12, wherein the size of the large bubble is greater than 10µm,
the size of the large particle size oil droplet is greater than 20µm,
the size of the small bubble is 5 to 10µm, and
the size of the small particle size oil droplet is 10 to 20µm.

14. The separation method in Claim 12, wherein the acceleration of main phase processed in the main separation pipe is 5 to 5000 times of the gravitational acceleration, and
the acceleration of main phase processed in the auxiliary separation pipe is 10 to 10000 times of the gravitational acceleration.

15. A separation method using the adaptive and integrated multi-phase separation device in any of Claim 8 to 11, wherein the separation method includes the steps of:
(1) materials to be treated entering the distribution tank through the inlet pipe, after being buffered by the distribution tank, materials to be treated entering the connecting distribution pipe, and reaching the distribution pipe through the connecting distribution pipe, the distribution pipes are connected to ensure uniform distribution of materials, materials entering the integrated separation core tube through the distribution tube;
(2) materials to be treated first entering the main separation pipe of the integrated separation core tube, and removing large bubbles, large particle size oil droplets and suspended solids adhering to the large bubbles and large particle size oil droplets through the action of swirling flow field in the main separation pipe;
(3) the remaining liquid phase after separation entering the auxiliary separation pipes through the connecting pipes between main and auxiliary pipes, through the tangential swirl generation opening of the auxiliary separation pipe, the liquid phase doing rotational flow in the auxiliary separation pipe to further remove small bubbles, small particle size oil droplets and remaining suspended solids adhering to the small bubbles and small particle size oil droplets; and
(4) the heavy liquid phase obtained after separation being discharged from the periphery of the heavy phase separation cone.
